# EUROPÄISCHE PATENTANMELDUNG

(11) **EP 4 800 861 A1**
(43) Veröffentlichungstag der Anmeldung: **02.09.2026**
(21) Anmeldenummer: 26154756.6
(22) Anmeldetag: 28.01.2026
(51) Int. Cl.: H02G 3/08, G02B 6/44, H02G 3/22, H02G 15/007, H02G 15/04

(54) **EINZELZUGABDICHTUNG MIT ZUGENTLASTUNG**

(30) Priorität: 28.02.2025 DE 102025107746
(71) Anmelder: gabo Systemtechnik GmbH, 94559 Niederwinkling (DE)
(72) Erfinder: Karl, Markus, 94327 Bogen (DE); Geiger, Alexander, 94559 Niederwinkling (DE)
(74) Vertreter: Schmid, Nils T.F.

(57) **Zusammenfassung**

Die vorliegende Erfindung betrifft eine Verschluss- und Abdichtungsvorrichtung für mit Fasern und wenigstens einem Faden oder Garn belegte Rohre, umfassend einen hohlen Hülsenkörper mit einer Einführöffnung für das Rohr und einer Austrittsöffnung für die Kabel, wobei eine die Austrittsöffnung begrenzende Stirnwand einen in Längsrichtung der Verschluss- und Abdichtungsvorrichtung orientierten Schlitz aufweist, durch den der wenigstens eine Faden oder Garn hindurch führbar ist, um den wenigstens einen Faden oder Garn an einem Außenumfang des Hülsenkörpers zu befestigen.

## Beschreibung

Die vorliegende Erfindung betrifft eine Verschluss- und Abdichtungsvorrichtung für mit Kabeln und wenigstens einem Faden oder Garn belegte Rohre.

Gattungsgemäße Verschluss- und Abdichtungsvorrichtungen dienen insbesondere der Abdichtung von einem oder mehreren in Kabelkanälen verlegter Kabel bzw. Rohre und/oder als Verschlussstopfen zu deren Verschluss gegenüber der Umgebung. Eine solche Verschluss- und Abdichtungsvorrichtung ist beispielsweise aus der EP 1 289 087 B1 bekannt.

Die Vorrichtung gemäß EP 1 289 087 B1 hat sich grundsätzlich bewährt. Es hat sich allerdings herausgestellt, dass bei möglichen Längenänderungen, beispielsweise durch Temperaturschwankungen oder durch mechanische Belastung, Zug- und/oder Druckkräfte auf die verlegten Kabel, die beispielsweise empfindliche Glasfaserkabel sein können, einwirken, welche die Kabel beschädigen können. Ferner ist die Vorrichtung und insbesondere die darin geführten Kabel auch anfällig gegenüber äußeren Einflüssen wie beispielsweise durch Vandalismus.

Aus der EP 3 547 000 A1 ist eine Zugsentlastungsvorrichtung bekannt, welche an eine Endkappe zum Verschließen eines mit Glasfaserbündeladerkabeln belegten Glasfaserverlegerohrs montierbar ist, um das Rutschen der Glasfaserbündeladerkabel durch das Glasfaserverlegerohr zu verhindern und somit eine genaue Anordnung und Einführung des Glasfaserbündeladerkabels in einem Verteilerkasten zu bewahren, sowie eine Verschiebung des Glasfaserbündeladerkabels in Bezug auf das Glasfaserverlegerohr entlang deren Längsachse zumindest teilweise zu verhindern.

Die Zugentlastungsvorrichtung ist als separates, auf die Endkappe aufsteckbares und damit verrastbares Bauteil ausgebildet, welches grundsätzlich eine bogensegmentartige Grundstruktur aufweist. Die Vorrichtung hat außerdem Rast- und Verbindungsabschnitte zum Befestigen an der Endkappe. Die Zugentlastungsfunktion wird realisiert durch eine aufwendige Formgebung an einem Ende der Zugentlastungsvorrichtung. Beispielsweise weist ein Ende der Vorrichtung einen T-förmigen Umwicklungsabschnitt auf, um den eine in dem Verlegerohr geführte Haltefaser herumwickelbar und daran befestigbar ist.

Auch wenn dadurch grundsätzlich eine Zugentlastung erreicht und somit ein Schutz der empfindlichen Glasfaserkabel bewirkt ist, bestehen erheblich Verbesserungspotenziale. Denn die Vorrichtung ist sehr aufwendig und komplex konstruiert. Des Weiteren muss die Befestigung an der Endkappe erfolgen, sodass zum einen zusätzliche Herstellungs- und zum anderen zusätzliche Montageschritte notwendig sind. Dadurch entstehen auch erhöhte Kosten, um eine Zugentlastung zu gewährleisten. Die Funktionalität der Vorrichtung ist außerdem davon abhängig, dass die Vorrichtung an der Endkappe haften bleibt.

Eine Aufgabe der vorliegenden Erfindung besteht darin, die Nachteile aus dem Stand der Technik zu überwinden, insbesondere eine einfacher zu realisierende Zugentlastung für in Rohren verlegte Kabel bereitzustellen.

Die Aufgabe wird durch den Gegenstand der unabhängigen Ansprüche gelöst.

Danach ist eine Verschluss- und Abdichtungsvorrichtung, im Folgenden auch abgekürzt als Vorrichtung bezeichnet, für ein mit Fasern und wenigstens einem Faden oder Garn belegtes Rohr, wie Glasfaserkabel führende Kunststoffrohre, bereitgestellt. Insbesondere sind die Fasern und der wenigstens eine Faden oder Garn von einem Kabel ummantelt, vorzugsweise vor äußeren Einflüssen geschützt. Insbesondere umfasst ein Kabel, auch Glasfaserkabel genannt, eine Mehrzahl von Fasern, insbesondere Glasfasern, sogenannte Faserbündel und zumindest einen Faden oder Garn. Der Faden oder Garn kann ein Seil, ein Draht und/oder oder eine Kordel sein, eine Verstärkungsfaser zur Verstärkung eines Bündels an Fasern umfassen oder sein. Beispielsweise umfasst der Faden oder Garn ein Glas-, Kohle-, Aramid- und/oder Kohle/Aramid-Material.

Die Verschluss- und Abdichtungsvorrichtung umfasst einen hohlen Hülsenkörper mit einer Einführöffnung für das Rohr und einer Austrittsöffnung für die Fasern, insbesondere das Kabel. Im Bereich der Austrittsöffnung kann ein Axialanschlag für das Rohr vorgesehen sein. Der Axialanschlag kann eine Montageendposition des Rohres in dem Hülsenkörper festlegen. Sofern das Rohr axial über die Einführöffnung in den Hülsenkörper eingesetzt oder eingeschoben wird, kann der Axialanschlag einen relativen Verschiebeweg des Rohres in dem Hülsenkörper begrenzen. Die Verschluss- und Abdichtungsvorrichtung kann dazu ausgelegt sein, unbelegte und belegte Rohre gas- und/oder wasserdicht abzudichten. Der Axialanschlag kann an der Innenseite des Hülsenkörpers angeordnet sein. Der Axialanschlag kann außerdem durch einen Stirnwandabschnitt oder einen nach radial innen ragenden, zumindest abschnittsweise umlaufenden Vorsprung gebildet werden.

Beispielsweise ist die Verschluss- und Abdichtungsvorrichtung grundsätzlich entsprechend der EP 1 289 087 B1 ausgebildet, dessen Inhalt hierin unter Bezugnahme vollständig aufgenommen ist.

Erfindungsgemäß weist eine die Austrittsöffnung begrenzende Stirnwand einen in Längsrichtung der Verschluss- und Abdichtungsvorrichtung orientierten Schlitz auf, durch den der wenigstens eine Faden oder Garn hindurch führbar ist, um den wenigstens einen Faden oder Garn an einem Außenumfang des Hülsenkörpers zu befestigen. Durch diesen Schlitz kann der wenigstens eine Faden oder Garn auf einfache Weise, auch durch ein ungeübtes Bedienpersonal, hindurchgeführt werden, um ihn am Außenumfang des Hülsenkörpers zu befestigen. Dadurch ist eine vereinfachte Zugentlastung für die in den Rohren verlegten Fasern bzw. Kabelgeschaffen, da der Faden oder das Garn leicht durch den Schlitz geführt und am Außenumfang des Hülsenkörpers befestigt werden kann. Durch das Befestigen des Fadens oder Garns ist eine Zugentlastung dadurch ermöglicht, dass das Rutschen der Fasern bzw. Kabel relativ zum Rohr unterbunden ist. Die Vorrichtung ist weniger anfällig für äußere Einflüsse, da der Faden oder das Garn sicher am Hülsenkörper befestigt ist, ohne der Notwendigkeit zusätzlicher Komponenten. Der wesentliche Vorteil der vorliegenden Erfindung besteht darin, dass auf einfache Art und Weise, ohne dass zusätzliche Komponenten notwendig sind, eine zuverlässige Zugentlastung ausgebildet ist. Es ist ferner von Vorteil, dass die Zugentlastung auch nachträglich an bestehende, gattungsgemäße Vorrichtungen nachgerüstet werden kann, wie beispielsweise gemäß der EP 1 289 087 B1.

Gemäß einer beispielhaften Ausführung der vorliegenden Erfindung erstreckt sich der Schlitz in Längsrichtung der Verschluss- und Abdichtungsvorrichtung vollständig durch die Stirnwand. Der vollständig durch die Stirnwand verlaufende Schlitz ermöglicht eine einfachere und flexiblere Handhabung des Fadens oder Garns, der durch diesen Schlitz geführt wird. Dies ist besonders vorteilhaft, da es die Installation und Befestigung des Fadens oder Garns am Außenumfang des Hülsenkörpers erleichtert, ohne dass zusätzliche Werkzeuge oder komplexe Montageschritte erforderlich sind. Dadurch, dass der Schlitz die Stirnwand vollständig durchdringt, kann vermieden werden, dass der Faden oder Garn ungewollt aus dem Schlitz herausrutscht und so die notwendige Spannung zum sicheren Befestigen am Hülsenkörper verliert, wodurch die Funktion der Zugentlastung verloren ginge. Ein weiterer Vorteil dieser Ausführungsform ist die erhöhte Flexibilität bei der Anpassung der Vorrichtung an unterschiedliche Rohrdurchmesser und Kabelkonfigurationen, da der Schlitz eine einfache Anpassung des Fadens oder Garns an verschiedene Anforderungen ermöglicht.

Nach einer weiteren beispielhaften Ausführungsform der vorliegenden Erfindung beträgt eine Breite des Schlitzes quer zur Längsrichtung des Schlitzes in Umfangsrichtung des Hülsenkörpers dabei wenigstens 0,5 mm, insbesondere wenigstens 0,7 mm oder 1 mm. Diese spezifische Breitenangabe des Schlitzes stellt sicher, dass der Faden oder das Garn problemlos hindurchgeführt werden kann, ohne dass es zu Beschädigungen oder zu starkem Abrieb kommt. Ein Vorteil dieser Ausgestaltung liegt darin, dass die Breite des Schlitzes ausreichend dimensioniert ist, um eine einfache und sichere Führung des Fadens oder Garns zu gewährleisten, was die Montage und Befestigung erleichtert. Zudem wird durch die definierte Breite des Schlitzes eine zuverlässige Fixierung des Fadens oder Garns am Außenumfang des Hülsenkörpers ermöglicht, was zur Stabilität und Funktionalität der gesamten Vorrichtung beiträgt. Ein weiterer Vorteil besteht darin, dass durch die festgelegte Breite des Schlitzes die Gefahr von ungewolltem Verrutschen oder Herausziehen des Fadens oder Garns minimiert wird.

Gemäß einer beispielhaften Ausführung der vorliegenden Erfindung beträgt eine Tiefe des Schlitzes in Radialrichtung des Hülsenkörpers mindestens 1,0 mm, bevorzugt mindestens 1,5 mm oder 2,0 mm. Eine größere Tiefe des Schlitzes ermöglicht es, dass der Faden oder das Garn sicherer und stabiler durch die Stirnwand geführt werden kann. Eine ausreichende Tiefe des Schlitzes stellt sicher, dass der Faden oder das Garn nicht leicht verrutscht oder sich löst, was die Gefahr von Beschädigungen an empfindlichen Fasern bzw. Kabeln, wie Glasfaserkabeln, reduziert. Darüber hinaus trägt die erhöhte Tiefe zur Robustheit der Vorrichtung bei, indem sie äußeren Einflüssen, wie Vandalismus, besser standhält.

Gemäß einer beispielhaften Ausführung der vorliegenden Erfindung ist eine Tiefe des Schlitzes quer zur Längsrichtung des Schlitzes in Radialrichtung des Hülsenkörpers derart bemessen, dass radial zwischen dem Schlitz und einem Hülsenhohlraum ein Radialsteg vorhanden ist. Die spezifische Bemessung der Tiefe des Schlitzes in Radialrichtung des Hülsenkörpers sorgt dafür, dass ein Radialsteg zwischen dem Schlitz und dem Hülsenhohlraum verbleibt. Dieser Radialsteg dient als strukturelle Verstärkung und verhindert, dass der Hülsenkörper durch den Schlitz geschwächt wird. Dies ist besonders wichtig, um die mechanische Integrität der Vorrichtung zu gewährleisten, insbesondere wenn äußere Kräfte auf den Hülsenkörper einwirken. Der Radialsteg trägt dazu bei, dass die Vorrichtung den äußeren Einflüssen wie Temperaturschwankungen und Vandalismus besser standhält, indem er eine zusätzliche Stabilität bietet.

Gemäß einer beispielhaften Ausführung der vorliegenden Erfindung, weist die Vorrichtung zwei Schlitze auf, die insbesondere gegenüberliegend und/oder identisch ausgebildet sind. Diese Schlitze ermöglichen eine verbesserte Befestigung des Fadens oder Garns, indem sie eine gleichmäßige Verteilung der Zugkräfte entlang des Hülsenkörpers erlauben, indem zwei Adern des Garns oder Fadens durch je einen der Schlitze geführt und am Hülsenkörper befestigt werden. Der Hülsenkörper selbst kann aus zwei Hälften bestehen oder eine Längsteilung aufweisen, wodurch der Hülsenhohlraum freigelegt werden kann. Im Falle der Längsteilung kann der Hülsenkörper ein Scharnier, wie ein einstückig damit ausgebildetes Filmscharnier, aufweisen, um das die längsgeteilten Hülsenkörperabschnitte relativ zueinander verschwenkbar sind und die zum Einnehmen eines Montagezustands in Anschlag miteinander zu bringen sind. Diese Konstruktion erleichtert den Zugang zum Inneren der Vorrichtung und ermöglicht eine einfachere Installation und Wartung der darin verlegten Fasern bzw. Kabel. Die zwei Schlitze können in Bezug auf die Längsteilung oder die zwischen den Hälften resultierenden Grenzflächen in Umfangsrichtung des Hülsenkörpers äquidistant angeordnet sein. Diese Anordnung sorgt dafür, dass die Kräfte, die durch den Faden oder das Garn auf die Vorrichtung ausgeübt werden, gleichmäßig verteilt werden, was die Stabilität und Haltbarkeit der gesamten Vorrichtung erhöht. Ein Vorteil dieser Konstruktion ist die verbesserte Zugentlastung für die in den Rohren verlegten Fasern bzw. Kabel, da die gleichmäßige Verteilung der Zugkräfte das Risiko von Beschädigungen der Fasern bzw. Kabel, insbesondere bei empfindlichen Glasfaserkabeln, reduziert.

Gemäß einem weiteren Aspekt der vorliegenden Erfindung, der mit den vorhergehenden Aspekten und beispielhaften Ausführungen kombinierbar ist, ist eine Verschluss- und Abdichtungsvorrichtung, im Folgenden auch abgekürzt als Vorrichtung bezeichnet, für ein mit Fasern und wenigstens einem Faden oder Garn belegtes Rohr, wie Glasfaserkabel führende Kunststoffrohre, bereitgestellt. Insbesondere sind die Fasern und der wenigstens eine Faden oder Garn von einem Kabel ummantelt, vorzugsweise vor äußeren Einflüssen geschützt. Insbesondere umfasst ein Kabel, auch Glasfaserkabel genannt, eine Mehrzahl von Fasern, insbesondere Glasfasern, sogenannte Faserbündel und zumindest einen Faden oder Garn. Der Faden oder Garn kann ein Seil, ein Draht und/oder oder eine Kordel sein, eine Verstärkungsfaser zur Verstärkung eines Bündels an Fasern umfassen oder sein. Beispielsweise umfasst der Faden oder Garn ein Glas-, Kohle-, Aramid- und/oder Kohle/Aramid-Material.

Die Verschluss- und Abdichtungsvorrichtung umfasst einen hohlen Hülsenkörper mit einer Einführöffnung für das Rohr und einer Austrittsöffnung für die Fasern, insbesondere das Kabel.

Im Bereich der Austrittsöffnung kann ein Axialanschlag für das Rohr vorgesehen sein. Der Axialanschlag kann eine Montageendposition des Rohres in dem Hülsenkörper festlegen. Sofern das Rohr axial über die Einführöffnung in den Hülsenkörper eingesetzt oder eingeschoben wird, kann der Axialanschlag einen relativen Verschiebeweg des Rohres in dem Hülsenkörper begrenzen. Die Verschluss- und Abdichtungsvorrichtung kann dazu ausgelegt sein, unbelegte und belegte Rohre gas- und/oder wasserdicht abzudichten. Der Axialanschlag kann an der Innenseite des Hülsenkörpers angeordnet sein. Der Axialanschlag kann außerdem durch einen Stirnwandabschnitt oder einen nach radial innen ragenden, zumindest abschnittsweise umlaufenden Vorsprung gebildet werden.

Beispielsweise ist die Verschluss- und Abdichtungsvorrichtung grundsätzlich entsprechend der EP 1 289 087 B1 ausgebildet, dessen Inhalt hierin unter Bezugnahme vollständig aufgenommen ist.

Gemäß dem weiteren Erfindungsaspekt mündet eine die Austrittsöffnung begrenzende Stirnwand in eine ringförmig umlaufende Vertiefung, die zum Umwickeln mit dem wenigstens einen Faden oder Garn ausgebildet ist. Durch das Umwickeln des Hülsenkörpers ist eine Zugentlastung dadurch ermöglicht, dass das Rutschen der Fasern bzw. Kabel relativ zum Rohr unterbunden ist. Die Vorrichtung ist weniger anfällig für äußere Einflüsse, da der Faden oder das Garn sicher am Hülsenkörper befestigt ist, ohne der Notwendigkeit zusätzlicher Komponenten. Der wesentliche Vorteil der vorliegenden Erfindung besteht darin, dass auf einfache Art und Weise ohne, dass zusätzliche Komponenten notwendig sind, eine zuverlässige Zugentlastung ausgebildet ist. Die spezifische Ausbildung einer Vertiefung benachbart der Stirnwand ermöglicht eine verbesserte Zugentlastung und Fixierung der Fasern bzw. Kabel, indem der Faden oder das Garn in der Vertiefung sicher umwickelt und befestigt werden kann. Die ringförmig umlaufende Vertiefung bietet eine strukturierte und definierte Fläche, die das Umwickeln erleichtert und eine gleichmäßige Verteilung der Zugkräfte gewährleistet. Die Montage ist erleichtert, sodass auch ungeübtes Bedienpersonal zuverlässig die Montage übernehmen kann. Zudem trägt diese Konstruktion dazu bei, dass die Fasern bzw. Kabel in ihrer Position, nämlich in der Vertiefung, gehalten werden und nicht durch äußere Einflüsse wie Vibrationen oder Temperaturschwankungen verschoben werden.

Gemäß einer beispielhaften Ausführung der vorliegenden Erfindung ist ein Übergang von der Stirnwand in die Vertiefung und/oder ein Übergang von der Vertiefung in einen benachbarten Hülsenkörperabschnitt abgerundet. Die Abrundung der Übergänge trägt dazu bei, mechanische Spannungen zu reduzieren, die an scharfen Kanten auftreten könnten. Dies ist besonders wichtig, um die Lebensdauer der Vorrichtung zu verlängern. Durch die Verringerung von Spannungskonzentrationen wird die Gefahr von Materialermüdung und Rissen minimiert, was besonders bei Anwendungen mit wechselnden Temperatur- und Druckbedingungen von Vorteil ist.

Nach einer Ausführungsform ist ein Grund der Vertiefung im Querschnitt entweder konkav oder eben ausgebildet. Eine konkave Form des Grundes der Vertiefung kann dazu beitragen, den Faden oder das Garn besser zu zentrieren und zu fixieren, wodurch ein Verrutschen oder Lösen noch effektiver verhindert wird. Eine ebene Gestaltung des Grundes der Vertiefung bietet hingegen eine einfache und flache Oberfläche, die eine unkomplizierte und schnelle Befestigung des Fadens oder Garns ermöglicht.

Nach einer Ausführungsform ist ein Vertiefungsgrund in Radialrichtung weniger oder genauso weit von der Mittelachse des Hülsenkörpers entfernt wie ein Boden des Schlitzes. Diese Anordnung ermöglicht eine verbesserte Führung und Fixierung des Fadens oder Garns. Dies trägt dazu bei, dass der Faden oder Garn nicht verrutscht oder sich lockert, was die Zuverlässigkeit und Sicherheit der Abdichtung erhöht. Durch die Positionierung des Vertiefungsgrundes in geringerer oder gleicher Entfernung von der Mittelachse wird auch die Zugentlastung verbessert, da der Faden oder Garn in einer optimalen Position gehalten wird, um Zugkräfte effektiv aufzunehmen und zu verteilen.

Nach einer weiteren beispielhaften Ausführungsform ist ein Rohr über die Einführöffnung in den Hülsenkörper eingesetzt und kann mit einem im Bereich der Austrittsöffnung vorgesehenen Axialanschlag in Anschlagkontakt gebracht werden. Die Fasern und der wenigstens eine Faden oder Garn verlassen den Hülsenkörper über die Austrittsöffnung, wobei der Faden oder Garn durch den Schlitz geführt und am Außenumfang des Hülsenkörpers befestigt ist. Alternativ oder zusätzlich kann der Faden oder Garn um die ringförmig umlaufende Vertiefung gewickelt werden. Insbesondere sind die Fasern und der wenigstens eine Faden oder Garn von einem Kabel ummantelt, vorzugsweise vor äußeren Einflüssen geschützt. Insbesondere umfasst ein Kabel, auch Glasfaserkabel genannt, eine Mehrzahl von Fasern, insbesondere Glasfasern, sogenannte Faserbündel und zumindest einen Faden oder Garn. Der Axialanschlag kann an der Innenseite des Hülsenkörpers angeordnet sein. Der Axialanschlag kann außerdem durch einen Stirnwandabschnitt oder einen nach radial innen ragenden, zumindest abschnittsweise umlaufenden Vorsprung gebildet werden.

Gemäß einem weiteren Aspekt der vorliegenden Erfindung, der mit den vorhergehenden Aspekten und beispielhaften Ausführungen kombinierbar ist, ist ein Verfahren zum Verschließen und Abdichtung eines mit Fasern und wenigstens einem Faden oder Garn belegten Rohres bereitgestellt. Insbesondere ist das Verfahren dazu ausgelegt, eine Zugabfangung entsprechend der zuvor beschriebenen erfindungsgemäßen Verschluss- und Abdichtungsvorrichtung sicherzustellen.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: eine perspektivische Ansicht einer beispielhaften Ausführung einer erfindungsgemäßen Verschluss- und Abdichtungsvorrichtung;
- Figur 2: eine perspektivische Ansicht einer Hülsenkörperhälfte der Vorrichtung nach Figur 1; und
- Figur 3: eine Vorderansicht der Hülsenkörperhälfte aus Figur 2.

In der folgenden Beschreibung beispielhafter Ausführungen ist eine erfindungsgemäße Verschluss- und Abdichtungsvorrichtung im Allgemeinen mit der Bezugsziffer 1 versehen.

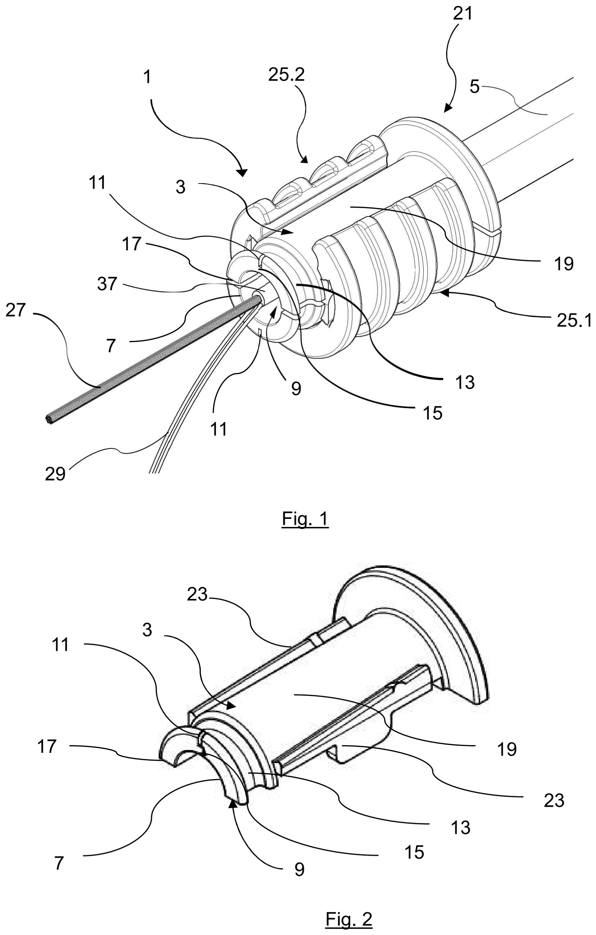

Figur 1 zeigt eine perspektivische Ansicht der Verschluss- und Abdichtungsvorrichtung 1, in der ein mit Fasern 27 und wenigstens einem Faden oder Garn 29 belegtes Rohr 5 angeordnet ist. Die Fasern 27 können beispielsweise Glasfasern sein. Die Fasern 27 und der wenigstens eine Faden oder Garn 29 können von einem Kabel 37, insbesondere Glasfaserkabel, ummantelt sein. Das Kabel 37 bzw. Glasfaserkabel kann die Fasern 27, die ein (Glas-) Faserbündel bilden, vor mechanischen Einwirkungen, wie Stöße oder Schläge, oder vor Umwelteinflüssen, wie Feuchtigkeit oder Schmutz, schützen. Beispielsweise kann in einem Rohr 5 genau ein Kabel 37 oder mehrere Kabel 37 vorgesehen sein. Ein Kabel 37 kann mehrere Fasern 27 oder Faserbündel umfassen. Ein Faserbündel umfasst zumindest zwei Fasern 27. Die Verschluss- und Abdichtungsvorrichtung 1 ist im Wesentlichen analog zu der in der EP 1 289 087 B1 beschrieben Vorrichtung ausgebildet und um eine erfindungsgemäße Zugentlastung oder Zugabfangung erweitert. Die Vorrichtung 1 umfasst einen hohlen Hülsenkörper 3, der eine Einführöffnung 21 für das Rohr 5 und eine Austrittsöffnung 7 für die Fasern 27 und den Garn oder Faden 29 beziehungsweise das Kabel 37 aufweist. Der Hülsenkörper 3 kann so gestaltet sein, dass er im Bereich der Austrittsöffnung 7 einen Axialanschlag 33 für das Rohr 5 bietet. Auf einer Außenseite des Hülsenkörpers 3 sind in Richtung dessen Längsachse schwalbenschwanzförmige Keile 23 angeformt (Figur 2). Die Keile 23 sind jeweils beidseitig der Trennungsebenen des beispielhaft zweiteiligen Hülsenkörpers 3 vorgesehen und entlang der Längsachse der Trennungsebenen, angedeutet durch das Bezugszeichen 17, als gegenseitige Verzahnung unterteilt. Außerdem wird der zweiteilige Hülsenkörper 3 noch von einem Verschlussteil 25 haltend umgriffen, das aus zwei einseitig miteinander verbundenen und um 180° versetzten, sich gegenüberliegenden Verbindungsklammem 25.1 und 25.2 besteht. Die Verbindungsklammem 25.1 und 25.2 sind derart ausgebildet, dass sie auf ihrer Innenseite die Gegenstücke der an den Hälften angeformten schwalbenschwanzförmigen Verschlusskeilen 23 aufweisen.

Die Austrittsöffnung 7 ist von einer Stirnwand begrenzt, die zwei in Längsrichtung der Vorrichtung 1 orientierte Schlitze 11 aufweist. Die Schlitze 11 ermöglichen es, den wenigstens einen Faden oder Garn 29 hindurch zum Außenumfang 19 des Hülsenkörpers 3 zu führen, um ihn dort zu befestigen, zu verknoten oder dergleichen, um eine Zugentlastung oder Zugabfangung auszubilden. Die Schlitze 11 sind äquidistant in Bezug auf die Längsteilung oder die Hälften des Hülsenkörpers 3, welche an Grenzflächen 17 im Montagezustand aufeinander liegen, angeordnet.

Der Hülsenkörper 3 weist eine ringförmig umlaufende Vertiefung 13 auf, die zum Umwickeln mit dem Faden oder Garn 29 ausgebildet ist. Diese Vertiefung 13 mündet in die Stirnwand und ist so gestaltet, dass ein Übergang von der Stirnwand in die Vertiefung und von der Vertiefung in einen benachbarten Hülsenkörperabschnitt abgerundet ist. Dies minimiert die Gefahr von Beschädigungen des Fadens oder Garns 29 während der Installation oder des Betriebs. Die Vorrichtung 1 ermöglicht eine effektive Zugentlastung und Abdichtung der Fasern 27 bzw. des Kabels 37, indem der Faden oder Garn durch den Schlitz 11 geführt und am Außenumfang in der Vertiefung 13 des Hülsenkörpers 3 verknotet wird.

In der Figur 1 ist auch ein Radialsteg 15 erkennbar, der zwischen dem Schlitz 11 und einem Hülsenhohlraum 9 vorhanden ist. Dieser Steg trägt zur strukturellen Integrität der Vorrichtung bei und verhindert ein ungewolltes Verformen der Schlitze 11 unter mechanischer Belastung.

Figur 2 zeigt eine weitere perspektivische Ansicht einer Hälfte des Hülsenkörpers 3. Hier ist der Schlitz 11 deutlicher zu erkennen, der sich vollständig durch die Stirnwand erstreckt. Der Hülsenkörper 3 ist in zwei Hälften unterteilt, die entlang einer Längsteilung verlaufen, was die Montage und Demontage der Vorrichtung erleichtert. Diese Teilung ermöglicht es, den Hülsenhohlraum 9 freizulegen und so den Einbau des Rohrs 5 und der Fasern 27 oder des Kabels 37 zu erleichtern. Die Grenzflächen 17 zwischen den Hälften sind so gestaltet, dass sie eine dichte Verbindung gewährleisten und das Eindringen von Feuchtigkeit oder Schmutz verhindern.

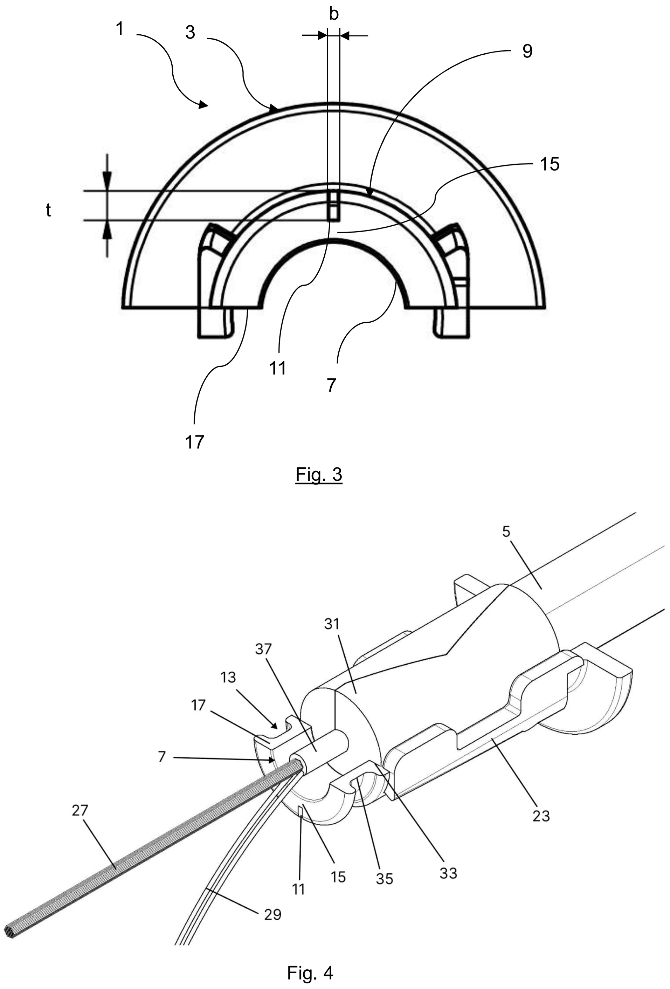

Figur 3 zeigt eine Vorderansicht der Hülsenkörper-Hälfte gemäß Figur 2. Die Breite b des Schlitzes 11 erstreckt sich quer zur Längsrichtung des Schlitzes 11 in Umfangsrichtung des Hülsenkörpers und beträgt mindestens 0,5 mm, vorzugsweise 0,7 mm oder 1 mm. Die Tiefe t des Schlitzes 11 erstreckt sich quer zur Längsrichtung des Schlitzes 11 in Radialrichtung des Hülsenkörpers und beträgt mindestens 1,0 mm, vorzugsweise 1,5 mm oder 2,0 mm. Die Tiefe t und die Breite b des Schlitzes 11 sind so bemessen, dass sie in Radialrichtung des Hülsenkörpers ausreichend Platz für die Durchführung des Fadens oder Garns 29 bietet, ohne die strukturelle Integrität des Hülsenkörpers zu beeinträchtigen. Ein Radialsteg 15 ist radial zwischen dem Schlitz 11 und einem Hülsenhohlraum 9 vorhanden, um die strukturelle Integrität der Vorrichtung zu gewährleisten.

Figur 4 zeigt eine weitere perspektivische Ansicht einer Hälfte des Hülsenkörpers 3, wobei das Rohr 5 im Montagezustand eingebracht ist, analog zu Figur 1. Der Axialanschlag 33 des Hülsenkörpers 3 ist hier deutlich zu erkennen. In der dargestellten Ausführung ist ein Dichtkörper 31 um den Endabschnitt des Rohrs 5 angeordnet. Dieser kann einerseits für einen verbesserten Halt des Rohrs 5 im Hülsenkörper 3 sorgen und das Rohr 5 abdichten, sodass keine Verunreinigungen eintreten können. Der Dichtkörper 31 weist eine Durchgangsöffnung für das Kable 37 auf. An der Vertiefung 13 ist der Vertiefungsgrund 35 erkennbar, vorzugsweise stellt dieser die Kontaktfläche zum umwickelten Faden oder Garn 29 um die Vertiefung 13 her.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- b: Breite
- t: Tiefe
- 1: Verschluss- und Abdichtungsvorrichtung
- 3: Hülsenkörper
- 5: Rohr
- 7: Austrittsöffnung
- 9: Hülsenhohlraum
- 11: Schlitz
- 13: Vertiefung
- 15: Radialsteg
- 17: Grenzflächen
- 19: Außenumfang
- 21: Einführöffnung
- 23: Keil
- 25, 25.1, 25.2: Verschlussteil
- 27: Fasern / Faserbündel
- 29: Faden oder Garn
- 31: Dichtkörper
- 33: Axialanschlag
- 35: Vertiefungsgrund
- 37: Kabel / Glasfaserkabel

## Patentansprüche

1. Verschluss- und Abdichtungsvorrichtung (1) für ein mit Fasern (27) und wenigstens einem Faden oder Garn (29) belegtes Rohr (5), umfassend einen hohlen Hülsenkörper (3) mit einer Einführöffnung (21) für das Rohr (5) und einer Austrittsöffnung (7) für die Fasern (27), **dadurch gekennzeichnet, dass** eine die Austrittsöffnung (7) begrenzende Stirnwand einen in Längsrichtung der Verschluss- und Abdichtungsvorrichtung (1) orientierten Schlitz (11) aufweist, durch den der wenigstens eine Faden oder Garn (29) hindurch führbar ist, um den wenigstens einen Faden oder Garn (29) an einem Außenumfang (19) des Hülsenkörpers (3) zu befestigen.

2. Vorrichtung (1) nach Anspruch 1, **dadurch gekennzeichnet, dass** sich der Schlitz (11) in Längsrichtung der Verschluss- und Abdichtungsvorrichtung (1) vollständig durch die Stirnwand erstreckt.

3. Vorrichtung (1) nach einem der vorstehenden Ansprüche, **dadurch gekennzeichnet, dass** eine Breite (b) des Schlitzes (11) quer zur Längsrichtung des Schlitzes (11) in Umfangsrichtung des Hülsenkörpers wenigstens 0,5 mm, insbesondere wenigstens 0,7 mm oder 1 mm, beträgt.

4. Vorrichtung (1) nach einem der vorstehenden Ansprüche, **dadurch gekennzeichnet, dass** eine Tiefe (t) des Schlitzes (11) quer zur Längsrichtung des Schlitzes (11) in Radialrichtung des Hülsenkörpers wenigstens 1,0 mm, insbesondere wenigstens 1,5 mm oder 2,0 mm, beträgt

5. Vorrichtung (1) nach einem der vorstehenden Ansprüche, **dadurch gekennzeichnet, dass** eine Tiefe (t) des Schlitzes (11) quer zur Längsrichtung des Schlitzes (11) in Radialrichtung des Hülsenkörpers derart bemessen ist, dass radial zwischen dem Schlitz (11) und einem Hülsenhohlraum (9) ein Radialsteg (15) vorhanden ist.

6. Vorrichtung (1) nach einem der vorstehenden Ansprüche, **dadurch gekennzeichnet, dass** die Stirnwand zwei, insbesondere gegenüberliegende und/oder identisch ausgebildete, Schlitze (11) aufweist, wobei insbesondere der Hülsenkörper (3) zwei Hälften oder eine Längsteilung aufweist, entlang der ein Hülsenhohlraum freilegbar ist, und die zwei Schlitze (11) in Bezug auf die Längsteilung oder die zwischen den Hälften resultierenden Grenzflächen (17) in Umfangsrichtung des Hülsenkörpers äquidistant angeordnet sind.

7. Verschluss- und Abdichtungsvorrichtung (1), insbesondere nach einem der vorstehenden Ansprüche, für ein mit Fasern (27) und wenigstens einem Faden oder Garn (29) belegtes Rohr (5), umfassend einen hohlen Hülsenkörper (3) mit einer Einführöffnung (21) für das Rohr (5) und einer Austrittsöffnung (7) für die Fasern (27), **dadurch gekennzeichnet, dass** eine die Austrittsöffnung (7) begrenzende Stirnwand in eine ringförmig umlaufende Vertiefung (13) mündet, die zum Umwickeln mit dem wenigstens einen Faden oder Garn (29) ausgebildet ist.

8. Vorrichtung (1) nach Anspruch 7, **dadurch gekennzeichnet, dass** ein Übergang von der Stirnwand in die Vertiefung (13) und/oder ein Übergang von der Vertiefung (13) in einen benachbarten Hülsenkörperabschnitt abgerundet ist.

9. Vorrichtung (1) nach Anspruch 7 oder 8, **dadurch gekennzeichnet, dass** ein Grund der Vertiefung (13) im Querschnitt konkav oder eben ausgebildet ist.

10. Vorrichtung (1) nach einem der Ansprüche 7 bis 9, **dadurch gekennzeichnet, dass** der Vertiefungsgrund (35) in Radialrichtung weniger oder genauso weit von der Mittelachse des Hülsenkörpers entfernt ist wie ein Boden des Schlitzes (11).

11. Vorrichtung (1) nach einem der vorstehenden Ansprüche, **dadurch gekennzeichnet, dass** ein mit Fasern (27) und wenigstens einem Faden oder Garn (29) belegtes Rohr (5) über die Einführöffnung (21) in den Hülsenkörper (3) eingesetzt ist, wobei die Fasern (27) und der wenigstens eine Faden oder Garn (29) den Hülsenkörper (3) über die Austrittsöffnung (7) verlassen und der wenigstens eine Faden oder Garn (29) durch den Schlitz (11) geführt und am Außenumfang (19) des Hülsenkörpers befestigt ist, und/oder um die ringförmig umlaufende Vertiefung (13) gewickelt ist.
